# EUROPEAN PATENT APPLICATION

(11) **EP 4 672 452 A1**
(43) Date of publication of application: **31.12.2025**
(21) Application number: 25181961.1
(22) Date of filing: 11.06.2025
(51) Int. Cl.: H01M 50/188, H01M 50/147, H01M 50/167, H01M 50/169, H01M 50/342, B23K 26/08, H01M 50/367, B23K 26/244, H01M 50/152

(54) **CAP ASSEMBLY, CAP ASSEMBLY MANUFACTURING METHOD AND SECONDARY BATTERY INCLUDING CAP ASSEMBLY**

(30) Priority: 24.06.2024 KR 20240082243
(71) Applicant: SAMSUNG SDI CO., LTD., Yongin-si, Gyeonggi-do 17084 (KR)
(72) Inventor: MOON, Sanghyup, 17084 Yongin-si (KR); PARK, Keunwoo, 17084 Yongin-si (KR)
(74) Representative: Marks & Clerk LLP

(57) **Abstract**

A cap assembly (300) includes a vent (320) deformable in response to a change in pressure, a cap-up (330) on the vent and connectable to an external terminal, the vent (320) surrounding a portion of an upper surface and a side surface of an outer edge of the cap-up (330), a cap-down (310) that is below the vent (320), and a plurality of welding marks (360) at a plurality of points on a portion of the vent (320) arranged on the portion of the upper surface of the outer edge of the cap-up (330), wherein each of the plurality of welding marks (360) intersects at least three times with an imaginary straight line (370) in a region where the upper surface of the outer edge of the cap-up (330) and the vent (320) come into contact, and wherein the imaginary straight line (370) is horizontal with respect to a boundary surface between the upper surface of the outer edge of the cap-up (330) and the vent (320).

## Description

### BACKGROUND

### 1. Field

Embodiments relate to a cap assembly, a cap assembly manufacturing method, and a secondary battery including the cap assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

The secondary battery includes an electrode assembly including a positive electrode and a negative electrode, a case that accommodates the electrode assembly, and a cap assembly coupled to an upper portion of the case.

In the manufacturing of the cap assembly, laser welding may be employed to secure a safety vent and a cap-up. However, if a welding portion contains porosity, the welding portion may easily be separated by external impacts. Therefore, it is necessary to prevent the formation of porosity during laser welding to ensure sufficient strength of the welding portion.

The above information disclosed in this Background section is for enhancement of understanding of the background of the present disclosure, and therefore, it may contain information that does not constitute related (or prior) art.

### SUMMARY

Embodiments include a cap assembly, the cap assembly including a vent that deforms in response to a change in pressure, a cap-up that is on the vent and is connected or connectable (e.g an electrical connection) to an external terminal, the vent surrounding a portion of an upper surface and a side surface of an outer edge of the cap-up, a cap-down that is below (the cap-down can be said to be on an opposite side of the vent to the cap-up, and may be facing the cap up across the vent) the vent, and a plurality of welding marks at each of a plurality of points on a portion of the vent arranged on the portion of the upper surface of the outer edge of the cap-up, wherein each of the plurality of welding marks intersects at least three times with an imaginary straight line in a region where the upper surface of the outer edge of the cap-up and the vent come into contact, and wherein the imaginary straight line is horizontal with respect to a boundary surface between the upper surface of the outer edge of the cap-up and the vent.

Each of the plurality of welding marks may be a continuous single line with different starting and ending points.

Each of the plurality of welding marks may include a first section with an open arc-shape, a second section extending from one end of the first section towards a center of the first section, and a third section connecting the first section and the second section.

The first section may have a diameter ranging from 0.5 mm to 1.2 mm.

The second section may extend towards the center of the first section with a length that is 60% to 70% of a diameter of the first section.

Each of the plurality of welding marks may be a continuous single line having a width ranging from 0.1 mm to 0.3 mm, and wherein the first section and the second section may have a separation distance therebetween ranging from 0.05 mm to 0.2 mm on the imaginary straight line.

Each of the plurality of welding marks may be a G-shaped welding mark.

Each of the plurality of welding marks may be a Z-shaped welding mark.

Each of the plurality of welding marks may be an S-shaped welding mark.

The vent may include a crimping portion surrounding the portion of the upper surface and the side surface of the outer edge of the cap-up, and a plurality of welding portions, which indicate the plurality of points at which welding is performed, on the crimping portion.

The plurality of welding portions may be symmetrical with respect to a center of the vent.

Neighboring welding portions of the plurality of welding portions may be at regular intervals.

The cap-down may include an insertion hole into which a protrusion of the vent is inserted, and a plurality of through holes formed at a distance from the insertion hole, the vent may include the protrusion that protrudes downward from a center of the vent, and a breakable portion that may be fractured by a pressure of a gas delivered through the plurality of through holes, and the cap-up may include a plurality of discharge holes to discharge the gas delivered through the breakable portion of the vent when the breakable portion is fractured by the pressure of the gas.

The cap assembly may further include an insulation layer between the cap-down and the vent, and a sub-plate that may be underneath the cap-down and may be connected to the vent and the cap-down.

Embodiments include a secondary battery, including an electrode assembly including a first electrode, a separator, and a second electrode, a case having one surface that is opened to receive the electrode assembly, and a cap assembly covering the one surface of the case to seal the electrode assembly from the outside, wherein the cap assembly includes a vent that deforms in response to a change in pressure, a cap-up on the vent and is connected to an external terminal, and a cap-down below the vent, wherein the vent surrounds a portion of an upper surface and a side surface of an outer edge of the cap-up, a plurality of welding marks at a plurality of points on a portion of the vent arranged on the portion of the upper surface of the outer edge of the cap-up, wherein each of the plurality of welding marks intersects at least three times with an imaginary straight line in a region where the upper surface of the outer edge of the cap-up and the vent come into contact, and wherein the imaginary straight line is horizontal with respect to a boundary surface between the upper surface of the outer edge of the cap-up and the vent.

The secondary battery may further include a gasket surrounding the cap assembly, and wherein the case includes a beading portion formed as a curved groove that is recessed towards an inside of the case to allow the gasket to be seated at an upper portion of the case, and a crimping portion formed by bending the upper portion of the case to enclose the gasket.

Embodiments include a method for manufacturing a cap assembly, the method including disposing a vent, which deforms in response to a change in pressure, above a cap-down, disposing a cap-up, which is connected to an external terminal, on the vent, crimping the vent to surround a portion of an upper surface and a side surface of an outer edge of the cap-up, and performing welding at each of a plurality of points on a portion of the vent disposed on the portion of the upper surface of the outer edge of the cap-up, wherein a plurality of welding marks are formed by performing the welding at each of the plurality of points, wherein each of the plurality of welding marks intersects at least three times with an imaginary straight line in a region where the upper surface of the outer edge of the cap-up and the vent come into contact, and wherein the imaginary straight line is horizontal with respect to a boundary surface between the upper surface of the outer edge of the cap-up and the vent.

The performing of the welding includes performing the welding at each of the plurality of points to form a continuous single line with different starting and ending points.

The performing of the welding includes performing the welding in a G-shaped pattern at each of the plurality of points such that the G-shaped pattern may include a first section with an open arc-shape, a second section extending from one end of the first section towards a center of the first section, and a third section connecting the first section and the second section.

The first section may have a diameter ranging from 0.5 mm to 1.2 mm, and wherein the second section may extend towards the center of the first section with a length that is 60% to 70% of a diameter of the first section.

In view of the above, embodiments of the present disclosure provide a cap assembly, a cap assembly manufacturing method, and a secondary battery including the cap assembly, which effectively resolve the issues described above.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail embodiments with reference to the attached drawings, in which:
FIG. 1 is a perspective view of a secondary battery according to one or more embodiments of the present disclosure;
FIG. 2 is a cross-sectional view taken along a line A-A in FIG. 1;
FIG. 3 is a cross-sectional view of a cap assembly according to one or more embodiments of the present disclosure;
FIG. 4 illustrates welding points on the vent and the cap-up according to one or more embodiments of the present disclosure;
FIG. 5 illustrates a welding mark according to one or more embodiments of the present disclosure;
FIG. 6 further illustrates the welding mark according to one or more embodiments of the present disclosure;
FIG. 7 illustrates a welding mark between the vent and the cap-up according to one or more embodiments of the present disclosure;
FIG. 8 illustrates a welding mark having a Z-shaped configuration according to one or more embodiments of the present disclosure;
FIG. 9 illustrates a welding mark having an S-shaped configuration according to one or more embodiments of the present disclosure; and
FIG. 10 is a flowchart illustrating a method for manufacturing a cap assembly according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

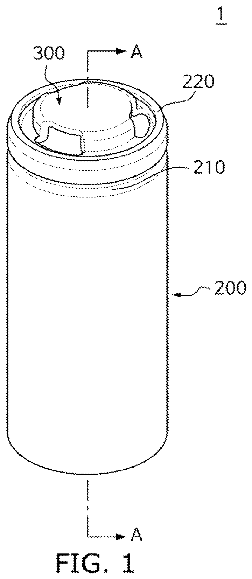

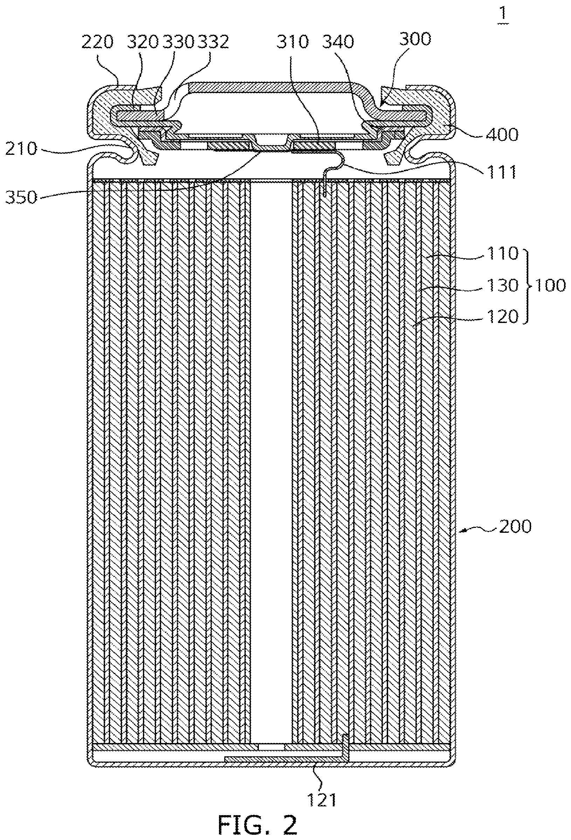

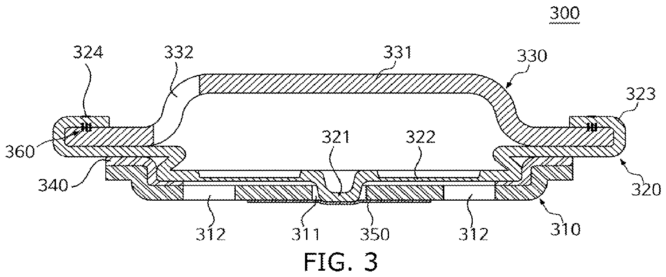

FIG. 1 is a perspective view of a secondary battery according to one embodiment of the present disclosure. FIG.2 is a cross-sectional view taken along a line A-A in FIG. 1. FIG. 3 is a cross-sectional view of a cap assembly according to one embodiment of the present disclosure.

Referring to FIGS. 1 to 3, in one or more embodiments, a secondary battery 1 may include an electrode assembly 100, a case 200, a cap assembly 300, and a gasket 400.

In one or more embodiments, the electrode assembly 100 may include a first electrode 110, a second electrode 120, and a separator 130. Here, the first electrode 110 may serve as a positive electrode while the second electrode 120 may serve as the negative electrode. The opposite case is also possible. In embodiment(s), the electrode assembly 100 may be a wound-type electrode assembly formed by winding the first electrode 110 and the second electrode 120 with the separator 130, which is an insulator interposed between the first electrode 110 and the second electrode 120. In other embodiment(s), the electrode assembly 100 may be a stacked-type electrode assembly formed by alternately stacking the first electrode 110 and the second electrode 120 with the separator 130 interposed between the first electrode 110 and the second electrode 120, or the electrode assembly 100 may have any other structure including the first electrode 110 and the second electrode 120. The structures of the electrode assembly 100 described above are merely examples, and the scope of the present disclosure is not limited thereto.

According to one embodiment, a positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

In one or more embodiments, the electrode assembly 100 may further include a first electrode tab 111 and a second electrode tab 121. The first electrode tab 111 may be formed separately and connected to an uncoated portion of the first electrode 110, or the first electrode tab 111 may be formed by punching out a portion of the uncoated portion. The first electrode tab 111 may extend upward from the uncoated portion and come into contact with the cap assembly 300. The configuration in which the first electrode tab 111 contacts the cap assembly 300 is merely an example, and the scope of the present disclosure is not limited thereto. By making contact between the first electrode tab 111 and the cap assembly 300, the first electrode 110 may be electrically connected to the cap assembly 300. Similarly, the second electrode tab 121 may be formed separately and connected to an uncoated portion of the second electrode 120, or the second electrode tab 121 may be formed by punching out a portion of the uncoated portion. The second electrode tab 121 may extend downward from the uncoated portion and come into contact with the case 200. The configuration in which the second electrode tab 121 contacts the case 200 is merely an example, and the scope of the present disclosure is not limited thereto. By making contact between the second electrode tab 121 and the case 200, the second electrode 120 may be electrically connected to the case 200. Although the example in which the first electrode tab 111 is electrically connected to the cap assembly 300 and the second electrode tab 121 is electrically connected to the case 200 has been described, the opposite case may also be possible and the scope of the present disclosure is not limited thereto.

In one or more embodiments, the case 200 may form the exterior of the secondary battery 1. For example, the case 200 may have an open cylindrical shape. The case 200 may be formed of stainless steel (SUS). Alternatively, the case 200 may be formed of a conductive metal such as aluminum, an aluminum alloy, or nickel-plated steel.

In one or more embodiments, the case 200 may have one surface that is opened to receive the electrode assembly 100. For example, an upper surface of the case 200 opposite to a lower surface of the case 200 may be opened to expose a space for accommodating the electrode assembly 100. After the electrode assembly 100 is accommodated in the case 200, the opened one surface of the case 200 may be covered by the cap assembly 300 to seal the electrode assembly 100 from the outside.

In one or more embodiments, the case 200 may be connected to the second electrode tab 121. The case 200 may be electrically connected to the second electrode 120 through the second electrode tab 121.

In one or more embodiments, the case 200 may include a beading portion 210 and a crimping portion 220.

In one or more embodiments, the beading portion 210 may be a curved groove that is recessed towards an inside of the case 200 to allow a gasket 400 to be seated at an upper portion of the case 200. The beading portion 210 may be formed as a curved groove by pressing the upper portion of the case 200 inwardly along the periphery of the case 200 between the electrode assembly 100 and the gasket 400. The beading portion 210 may prevent the movement of the electrode assembly 100 and support the cap assembly 300. A gasket 400 may be disposed to securely seat the cap assembly 300 on the beading portion 210.

In one or more embodiments, the crimping portion 220 may be formed by bending an upper portion of the case 200 to enclose the gasket 400. The crimping portion 220 may press an upper portion of the cap assembly 300 with the gasket 400 interposed therebetween. The crimping portion 220 may enclose the cap assembly 300 and the gasket 400, ensuring a secure and tight fit of the case 200 with the cap assembly 300 and the gasket 400. The crimping portion 220 may be formed using a crimping jig after the cap assembly 300 is seated with the gasket 400 on the beading portion 210. The crimping portion 220 may help prevent the cap assembly 300 from detaching and also prevent leakage of the electrolyte.

In one or more embodiments, the cap assembly 300 may cover the opened one surface of the case 200 to seal the electrode assembly 100 from the outside. An entire surface of an outer edge of the cap assembly 300 may be surrounded by a gasket 400 such that the cap assembly 300 is seated on the beading portion 210 of the case 200 and fixed to the case 200 by the crimping portion 220.

In one or more embodiments, the cap assembly 300 may be electrically connected to the first electrode tab 111. The cap assembly 300 may be electrically connected to the first electrode 110 through the first electrode tab 111. A lower portion of the cap assembly 300 may be connected to the first electrode tab 111 within the case 200, while the upper portion of the cap assembly 300 may be connected to an external terminal.

In one or more embodiments, the cap assembly 300 includes a cap-down 310, a vent 320, a cap-up 330, and may include an insulating layer 340, and a sub-plate 350.

In one or more embodiments, the cap-down 310 is below the vent 320. The cap-down 310 may be have a stepped portion depending on the shape of the vent 320. The insulating layer 340 may be on a portion of an upper surface of an outer edge of the cap-down 310 to insulate the cap-down 310 from the vent 320. A portion of a lower surface of the outer edge of the cap-down 310 may be in contact with the gasket 400 and may be supported by the case 200.

In one or more embodiments, the cap-down 310 may include an insertion hole 311 into which a protrusion 321 of the vent 320 may be inserted and a plurality of through holes 312 may be formed at a distance from the insertion hole 311.

In one or more embodiments, the insertion hole 311 may be at the center of the cap-down 310, so that the protrusion 321 of the vent 320 can be inserted into it. The protrusion 321 of the vent 320 may be inserted into the insertion hole 311 formed at the center of the cap-down 310 while being spaced apart from the insertion hole 311. The sub-plate 350 may be disposed underneath the cap-down 310. The cap-down and the vent 320 may be indirectly connected through the sub-plate 350 disposed underneath the cap-down 310. The cap-down 310 and the vent 320 may be electrically connected to the first electrode 110 through the first electrode tab 111 connected to the sub-plate 350.

In one or more embodiments, the plurality of through holes 312 may be spaced apart from the insertion hole 311. Gases generated in the secondary battery 1 may be vented through the plurality of through holes 312. In some embodiments, a breakable portion 322 of the vent 320 may be disposed over each of the plurality of the through holes 312. In other embodiments, the breakable portion 322 of the vent 320 may be arranged to be offset from each of the plurality of the through holes 312. For example, during the charging and discharging processes of the secondary battery 1, the electrolyte may be decomposed to generate gases. The generated gases may be vented through the plurality of through holes 312 formed in the cap-down 310. The breakable portion 322 of the vent 320 may be fractured by the pressure received from the gases vented through the plurality of the through holes 312.

In one or more embodiments, the vent 320 may be above the cap-down 310. The vent 320 may be insulated from the cap-down 310 through the insulating layer 340 on the upper surface of the outer edge of the cap-down 310. The vent 320 may surround a portion of an upper surface and a side surface of an outer edge of the cap-up 330. The gasket 400 may be disposed at the outside of the vent 320 to secure the vent 320 to the case 200.

In one or more embodiments, the vent 320 may include the protrusion 321, the breakable portion 322, a crimping portion 323, and a plurality of welding portions 324.

In one or more embodiments, the protrusion 321 may be formed to protrude downward from the center of the vent 320. The protrusion 321 may be inserted into the insertion hole 311 at the center of the cap-down 310 while being spaced apart from the insertion hole 311. The protrusion 321 of the vent 320 and the lower surface of the cap-down 310 may be indirectly connected through the sub-plate 350. The protrusion 321 may be electrically connected to the first electrode 110 through the first electrode tab 111 that is connected to the sub-plate 350.

In one or more embodiments, the breakable portion 322 may be fractured by the pressure of the gas delivered through the plurality of through holes 312. The breakable portion 322 may be formed with different thicknesses depending on the pressure intensity of the gas that may cause the fracture of the breakable portion 322. The breakable portion 322 may have a small thickness to allow the breakable portion 322 to be fractured under the pressure of the gas. The breakable portion 322 may be upwardly spaced apart from each of the plurality of through holes 312 or may be upwardly misaligned with each of the plurality of through holes 312. When the breakable portion 322 is fractured, the protrusion 321 may become separated from the cap-down 310 and the sub-plate 350. To facilitate easy separation from the cap-down 310 and the sub-plate 350, the vent 320 may have a stepped portion.

In one or more embodiments, the crimping portion 323 may surround the portion of the upper surface and the side surface of the outer edge of the cap-up 330. For example, the crimping portion 323 may be formed using the crimping jig after seating the cap-up 330 onto the vent 320. Through the crimping portion 323, the cap-up 330 may be fixed to the vent 320.

In one or more embodiments, the plurality of welding portions 324 may be formed on the crimping portion 323 to indicate points where multiple welding processes are performed. The plurality of welding portions 324 may be symmetrical with respect to the center of the vent 320, but the present disclosure is not limited thereto. Each of the plurality of welding portions 324 may be at regular intervals with neighboring welding portions 324, but the present disclosure is not limited thereto. By performing welding at each of the plurality of welding portions 324, a welding mark 360 may be formed in a region where the upper surface of the outer edge of the cap-up 330 and the vent 320 are in contact with each other. As will be described later, the welding mark 360 may intersect at least three times with an imaginary straight line 370 that is horizontal with respect to a boundary surface between the upper surface of the outer edge of the cap-up 330 and the vent 320.

In one or more embodiments, the cap-up 330 is disposed on the vent 320. The portion of the upper surface and the side surface of the outer edge of the cap-up 330 may be fixed by being surrounded by the vent 320. The vent 320 may surround the side surface of the cap-up 330 and a portion of the upper surface. The cap-up 330 may protrude upwards and have a stepped portion. The cap-up 330 may protrude upwards to be spaced apart from the vent 320. When the vent 320 is fractured, the protrusion 321 of the vent 320 may be separated from the cap-down 310 and the sub-plate 350, and move to a space formed by the cap-up 330 and the vent 320.

In one or more embodiments, the cap-up 330 may include a terminal portion 331 and a plurality of discharge holes 332.

In one or more embodiments, the terminal portion 331 may be connected to an external terminal. The cap-up 330 may be electrically connected to the first electrode 110 through the first electrode tab 111, the sub-plate 350, the cap-down 310, and the vent 320. The cap-up 330 may serve as the first electrode 110, and the terminal portion 331 may be connected (e.g. in contact with) to the external terminal.

In one or more embodiments, the plurality of discharge holes 332 may allow gases that pass through the breakable portion 322 of the vent 320 to be discharged. As described above, the breakable portion 322 of the vent 320 may be broken by the pressure of the gases, and the gases may be discharged through the plurality of discharge holes 332.

In one or more embodiments, the insulating layer 340 may be between the cap-down 310 and the vent 320. To ensure that the vent 320 and the cap-down 310 do not come into contact with each other, except through indirect connection via the sub-plate 350, the insulating layer 340 may be on the upper surface of the outer edge of the cap-down 310 to electrically insulate the vent 320 from the cap-down 310.

In one or more embodiments, the sub-plate 350 may be disposed underneath the cap-down 310. The sub-plate 350 may be connected to the cap-down 310 and the vent 320 from underneath the cap-down 310. The sub-plate 350 may be connected to the first electrode tab 111. Through the sub-plate 350, an indirect connection may be established between the cap-down 310 and the vent 320. The cap-down 310 and the vent 320 may be electrically connected to the first electrode 110 through the first electrode tab 111 that is connected to the sub-plate 350.

In one or more embodiments, the gasket 400 may surround the cap assembly 300 and be disposed between the case 200 and the cap assembly 300. For example, the gasket 400 may be arranged in a ring-shape on one side of the case 200. The gasket 400 may electrically insulate the cap assembly 300, which is connected to the first electrode 110, from the case 200, which is connected to the second electrode 120. Additionally, the gasket 400 may provide cushioning against external impacts to protect the cap assembly 300.

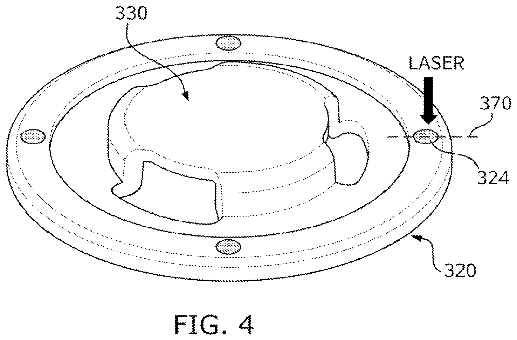

FIG. 4 illustrates welding points on the vent and the cap-up according to one embodiment of the present disclosure.

Referring to FIG. 4, in one or more embodiments, each of the plurality of welding portions 324 may be on a portion of the vent 320 that is on the portion of the upper surface of the outer edge of the cap-up 330. At each of the plurality of welding portions 324, welding may be performed on the upper surface of the cap-up 330.

In one or more embodiments, for example, welding may be performed using a laser beam, but is not limited thereto. When welding is performed, the cap-up 330 and the vent 320 may be melted and bonded together in a region where the upper surface of the outer edge of the cap-up 330 and the vent 320 contact, and the welding mark 360 may be made.

In one or more embodiments, the welding may be performed to form the welding mark 360 that intersects at least three times with an imaginary straight line 370 that is horizontal to the boundary surface between the upper surface of the outer edge of the cap-up 330 and the vent 320. This allows for sufficient strength of the welding portion to be achieved.

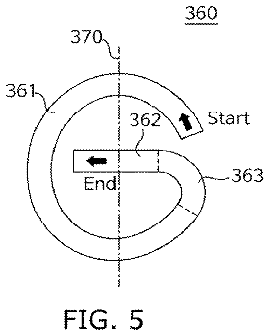

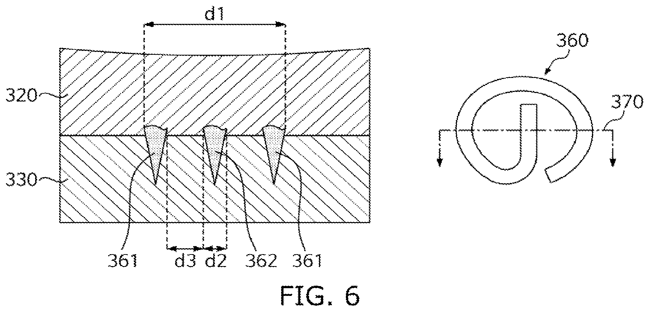

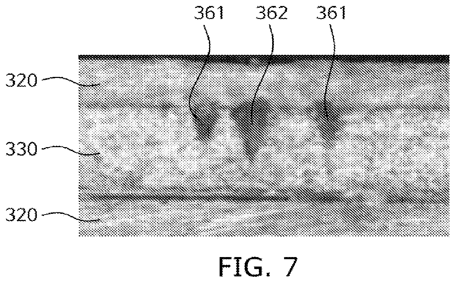

FIG. 5 illustrates a welding mark according to one embodiment of the present disclosure. FIG. 6 further illustrates the welding mark according to one embodiment of the present disclosure. FIG. 7 illustrates a welding mark formed between the vent and the cap-up according to one embodiment of the present disclosure.

Referring to FIGS. 5 to 7, in one or more embodiments, the welding mark 360 may intersect the imaginary straight line 370 three times. With this configuration, sufficient strength of the welding portion may be secured. Further, the welding mark 360 may be a continuous single line, with the starting and ending points being distinct from each other. In cases where overlapping points occur during welding, porosity may be created. Therefore, the welding path may be set to form a continuous single line with different starting and ending points, with the welding path intersecting the imaginary straight line 370 three times. Here, the welding path and the welding mark 360 may have the same shape.

In one or more embodiments, the welding mark 360 may be G-shaped, but the present disclosure is not limited thereto. The G-shaped welding mark 360 may include a first section 361 with an open arc-shape, a second section 362 extending from one end of the first section 361 towards a center of the first section 361, and a third section 363 connecting the first section 361 and the second section 362.

In one or more embodiments, a diameter d1 of the arc-shaped first section 361 may range from 0.5 mm to 1.2 mm, but is not limited thereto. The second section 362 may extend towards the center of the first section 361 with a length that is 60% to 70% of the diameter d1 of the first section 361. The welding mark 360 may be a continuous single line with a width d2 ranging from 0.1 mm to 0.3 mm, but is not limited thereto. The first section 361 and the second section 362 may have a separation distance d3 ranging from 0.05 mm to 0.2 mm on the imaginary straight line 370, but is not limited thereto.

As shown in FIG 7, welding may be performed using a laser such that the cap-up 330 and the vent 320 may be melted and bonded in the region where the upper surface of the outer edge of the cap-up 330 and the vent 320 are in contact. This results in the formation of the welding mark 360. Further, the welding may be performed with a single line where the starting and ending points are different and no overlapping points occur. Thus, the porosity may not be formed in the welding mark 360. Further, it may be possible to perform welding in such a manner that a welding depth in the second section 362, which is located at the center of the welding mark 360, is deeper than that in the first section 361. However, the present disclosure is not limited thereto.

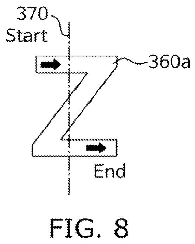

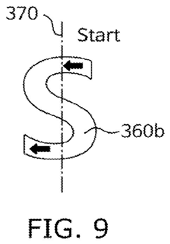

FIG. 8 illustrates a welding mark having a Z-shaped configuration according to one embodiment of the present disclosure. FIG. 9 illustrates a welding mark having an S-shaped configuration according to one embodiment of the present disclosure.

Referring to FIG. 8, in one or more embodiments, a Z-shaped welding path may be used to form a Z-shaped welding mark 360a. Referring to FIG. 9, in one or more embodiments, an S-shaped welding path may be used to form an S-shaped welding mark 360b.

In one or more embodiments, each of the Z-shaped welding mark 360a and the S-shaped welding mark 360b, similar to the previously described G-shaped welding mark 360, may be a continuous single line with no overlapping points and different starting and ending points. Further, the Z-shaped welding mark 360a and the S-shaped welding mark 360b may also intersect an imaginary straight line at least three times, similar to the previously described G-shaped welding mark 360. This configuration helps prevent the formation of porosity within the welding mark 360 and ensures sufficient strength of the welding portion.

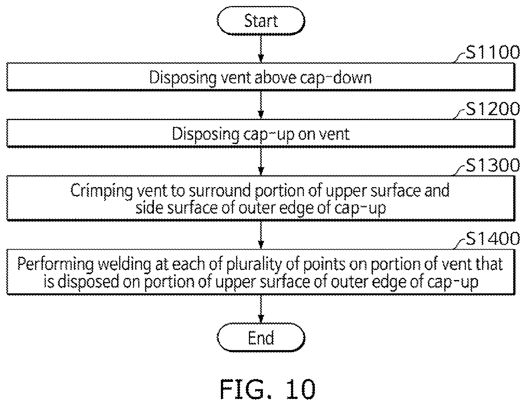

FIG. 10 is a flowchart illustrating a method for manufacturing a cap assembly according to one embodiment of the present disclosure.

Hereinafter, with reference to FIG. 10, a method for manufacturing the cap assembly will be described. The specific configuration of the cap assembly may be referred to those described with reference to FIGS. 1 to 3.

Referring to FIG. 10, according to another embodiment of the present disclosure, in step S1100, the vent 320 may be disposed above the cap-down 310. For example, the insulating layer 340 may be on the upper surface of the outer edge of the cap-down 310. The vent 320 may be above the cap-down 310 with the insulating layer 340 interposed between the vent 320 and the cap-down 310. The protrusion 321 protruding downward from the center of the vent 320 may be inserted into the insertion hole 311 formed at the center of the cap-down 310 while being vertically spaced apart from the insertion hole 311. The sub-plate 350 may be disposed underneath the cap-down 310. The protrusion 321 of the vent 320 may be connected to the sub-plate 350 disposed underneath the cap-down 310. The vent 320 and the cap-down 310 may be indirectly connected to each other through the sub-plate 350.

In step S1200, the cap-up 330 may be put on the vent 320. The cap-up 330 may protrude upward from the center thereof, creating a step-like feature. The cap-up 330 may be vertically spaced apart from the vent 320 at the center thereof while making contact with the vent 320 at the outer edge of the cap-up 330.

In step S1300, the vent 320 may be crimped to surround a portion of the upper surface and the side surface of the outer edge of the cap-up 330. After placing the cap-up 330 on the vent 320, the vent 320 may be crimped using a crimping jig. The crimped vent 320 may secure the cap-up 330 in place on the vent 320.

In step S1400, welding may be performed at a plurality of points on a portion of the vent 320 that is disposed on the portion of the upper surface of the outer edge of the cap-up 330. Thus, the welding may be carried out at multiple points on the upper surface of the cap-up 330. By using a predetermined welding path or shape, a welding mark 360 may be formed in a region where the upper surface of the outer edge of the cap-up 330 and the vent 320 are in contact with each other. Further, the welding may be performed such that the welding mark 360 may be formed as a continuous single line where the starting point and the ending point are different with no overlapping points. Further, the welding mark 360 may be formed to intersect at least three times with an imaginary straight line that is horizontal to the boundary surface between the upper surface of the outer edge of the cap-up 330 and the vent 320.

For example, the welding may be performed to form a G-shaped welding mark 360. In an implementation, the G-shaped welding mark 360 may include a first section 361 with an open arc-shape, a second section 362 extending from one end of the first section 361 towards a center of the first section 361, and a third section 363 connecting the first section 361 and the second section 362. Here, the diameter of the first section 361 may range from 0.5 mm to 1.2 mm, but is not limited thereto. The second section 362 may extend towards the center of the first section 361 with a length of 60% to 70% of the diameter of the first section 361. The welding mark 360 may be formed as a continuous single line with a width ranging from 0.1 mm to 0.3 mm, but is not limited thereto. The first section 361 and the second section 362 may have a separation distance ranging from 0.05 mm to 0.2 mm on the imaginary straight line 370, but is not limited thereto. In this manner, strong welding can be achieved between the vent 320 and the cap-up 330 without creating porosity.

Although the present disclosure has been described above with respect to embodiments thereof, the present disclosure is not limited thereto. Various modifications and variations can be made thereto by those skilled in the art within the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### [DESCRIPTION OF SOME REFERENCE SYMBOLS]

1: secondary battery
100: electrode assembly
200: case
300: cap assembly
310: cap-down
320: vent
330: cap-up
340: insulating layer
350: sub-plate
360: welding mark
370: imaginary straight line
400: gasket

## Claims

1. A cap assembly (300), comprising:
a vent (320) configured to deform in response to a change in pressure;
a cap-up (330) that is on the vent (320) and is connectable to an external terminal, the vent (320) surrounding a portion of an upper surface and a side surface of an outer edge of the cap-up (330);
a cap-down (310) that is below the vent (320); and
a plurality of welding marks (360) at each of a plurality of points on a portion of the vent (320) arranged on the portion of the upper surface of the outer edge of the cap-up (330),
wherein each of the plurality of welding marks (360) intersects at least three times with an imaginary straight line in a region where the upper surface of the outer edge of the cap-up (330) and the vent (320) come into contact, and
wherein the imaginary straight line (370) is horizontal with respect to a boundary surface between the upper surface of the outer edge of the cap-up (330) and the vent (320).

2. The cap assembly (300) as claimed in claim 1, wherein each of the plurality of welding marks (360) is a continuous single line with different starting and ending points.

3. The cap assembly (300) as claimed in claim 1 or 2, wherein each of the plurality of welding marks (360) comprises a first section (361) with an open arc-shape, a second section (362) extending from one end of the first section (361) towards a center of the first section, and a third section (363) connecting the first section (361) and the second section (362).

4. The cap assembly (300) as claimed in claim 3, wherein the first section (361) has a diameter ranging from 0.5 mm to 1.2 mm.

5. The cap assembly (300) as claimed in claim 3 or 4, wherein the second section (362) extends towards the center of the first section (361) with a length that is 60% to 70% of a diameter of the first section.

6. The cap assembly (300) as claimed in claim 3, 4 or 5, wherein each of the plurality of welding marks (360) is a continuous single line having a width ranging from 0.1 mm to 0.3 mm, and
wherein the first section (361) and the second section (362) have a separation distance therebetween ranging from 0.05 mm to 0.2 mm on the imaginary straight line.

7. The cap assembly (300) as claimed in any one of claim 1 to 6, wherein each of the plurality of welding marks (360) comprises at least one of a G-shaped welding mark, a Z-shaped welding mark, or a S-shaped welding mark.

8. The cap assembly (300) as claimed in any one of claims 1 to 7, wherein the vent (320) comprises a crimping portion (323) surrounding the portion of the upper surface and the side surface of the outer edge of the cap-up (330), and
a plurality of welding portions (324), which indicate the plurality of points at which welding is performed, on the crimping portion (323).

9. The cap assembly (300) as claimed in any one of claims 1 to 8, wherein the plurality of welding portions (324) are symmetrical with respect to a center of the vent (320).

10. The cap assembly (300) as claimed in any one of claims 1 to 9, wherein
the cap-down (310) comprises:
an insertion hole (311) into which a protrusion (321) of the vent (320) is inserted, and
a plurality of through holes (312) at a distance from the insertion hole (311), the vent (320) comprises:
the protrusion (321) that protrudes downward from a center of the vent (320), and
a breakable portion (322) that is fractured by a pressure of a gas delivered through the plurality of through holes (312), and
the cap-up (330) comprises:
a plurality of discharge holes (332) to discharge the gas delivered through the breakable portion (322) of the vent (320) when the breakable portion (322) is fractured by the pressure of the gas.

11. The cap assembly (300) as claimed in any one of claims 1 to 10, further comprising:
an insulation layer (340) between the cap-down (310) and the vent (320); and
a sub-plate (350) that is underneath the cap-down (310) and is connected to the vent (320) and the cap-down (310).

12. A secondary battery (1), comprising:
an electrode assembly (100) comprising a first electrode (110), a separator (130), and a second electrode (120);
a case (200) having one surface that is opened to receive the electrode assembly (100); and
the cap assembly (300) of any preceding claims covering the one surface of the case (200) to seal the electrode assembly (100) from the outside.

13. The secondary battery (1) as claimed in claim 12, further comprising:
a gasket (400) surrounding the cap assembly; and
wherein the case (200) comprises:
a beading portion (210) formed as a curved groove that is recessed towards an inside of the case (200) to allow the gasket (400) to be seated at an upper portion of the case (200); and
a crimping portion (220) formed by bending the upper portion of the case (200) to enclose the gasket (400).

14. A method for manufacturing a cap assembly (300), the method comprising:
disposing a vent (320), which deforms in response to a change in pressure, above a cap-down (310);
disposing a cap-up (330), which is connected to an external terminal, on the vent (320);
crimping the vent (320) to surround a portion of an upper surface and a side surface of an outer edge of the cap-up (330); and
performing welding at each of a plurality of points on a portion of the vent (320) on the portion of the upper surface of the outer edge of the cap-up (330),
wherein a plurality of welding marks (360) are formed by performing the welding at each of the plurality of points,
wherein each of the plurality of welding marks (360) intersects at least three times with an imaginary straight line (370) in a region where the upper surface of the outer edge of the cap-up (330) and the vent (320) come into contact, and
wherein the imaginary straight line (370) is horizontal with respect to a boundary surface between the upper surface of the outer edge of the cap-up (330) and the vent (320).

15. The method as claimed in claim 14, wherein the performing of the welding comprises performing the welding at each of the plurality of points to form a continuous single line with different starting and ending points.
